# EUROPEAN PATENT APPLICATION

(11) **EP 4 593 179 A1**
(43) Date of publication of application: **30.07.2025**
(21) Application number: 22959940.2
(22) Date of filing: 28.09.2022
(51) Int. Cl.: H01M 50/30, H01M 50/244, H01M 50/204

(54) **EXHAUST ASSEMBLY, BATTERY PACK, AND ELECTRIC DEVICE**

(71) Applicant: CONTEMPORARY AMPEREX TECHNOLOGY (HONG KONG) LIMITED, Hong Kong (HK)
(72) Inventor: TANG, Yu, Ningde, Fujian 352100 (CN); XU, Chenyi, Ningde, Fujian 352100 (CN); ZHANG, Chenchen, Ningde, Fujian 352100 (CN); LI, Xing, Ningde, Fujian 352100 (CN)
(74) Representative: Herrmann, Uwe
(86) International application number: PCT/CN2022/122207
(87) International publication number: WO 2024/065295

(57) **Abstract**

This application provides an exhaust assembly, a battery pack, and an electrical device. The exhaust assembly includes an exhaust portion, a connecting portion, and a sealing structure. The exhaust portion is configured to receive emissions from a battery cell. The exhaust assembly is connected to a box of the battery pack by the connecting portion. The sealing structure is disposed at a junction between the connecting portion and the box. In this application, high-temperature and high-pressure gases and conductive particles expelled from a thermally runaway battery cell can enter the exhaust portion and be directionally expelled out of the battery pack through the exhaust portion. The connecting portion may be connected to the box of the battery pack by a connecting piece such as a bolt. The sealing structure can seal a gap at a junction between the connecting portion and the box, thereby avoiding gas leakage and preventing normal battery cells in the vicinity from being thermally runaway.

## Description

### TECHNICAL FIELD

This application relates to the technical field of power batteries, and in particular, to an exhaust assembly, a battery pack, and an electrical device.

### BACKGROUND

When a battery is thermally runaway, a high-temperature and high-pressure gas is generated, and an explosion-proof valve needs to be burst open quickly at this time to expel the high-temperature and high-pressure gas through the explosion-proof valve, so as to avoid instantaneous explosion of a battery pack and other problems. However, due to the compact arrangement between battery cells, the high-temperature and high-pressure gas ejected from the thermally runaway battery cell adversely affects normal battery cells in the vicinity, thereby leading to failure of separating the thermal runaway region from the electrical connection region.

### SUMMARY

An objective of this application is to provide an exhaust assembly, a battery pack, and an electrical device to solve the existing problem that the high-temperature and high-pressure gases ejected by a thermally runaway battery cell lead to thermal runaway of normal battery cells in the vicinity.

A first aspect of this application provides an exhaust assembly. The exhaust assembly includes an exhaust portion, a connecting portion, and a sealing structure. The exhaust portion is configured to receive emissions from a battery cell. The exhaust assembly is connected to a box of the battery pack by the connecting portion. The sealing structure is disposed at a junction between the connecting portion and the box.

In this application, high-temperature and high-pressure gases and conductive particles expelled from a thermally runaway battery can enter the exhaust portion and be directionally expelled out of the battery pack through the exhaust portion. The connecting portion may be connected to the box of the battery pack by a connecting piece such as a bolt. The sealing structure can seal a gap at a junction between the connecting portion and the box, thereby avoiding gas leakage and preventing normal batteries in the vicinity from being thermally runaway.

In some embodiments, a first cavity is disposed in the exhaust portion. An exhaust hole coordinating with the battery cell is disposed on a sidewall of the first cavity. The high-temperature and high-pressure gases and conductive particles expelled from a thermally runaway battery can enter the first cavity through the exhaust hole, so as to be expelled out of the battery pack through the first cavity.

In some embodiments, the sealing structure includes a second cavity. The second cavity is disconnected from the first cavity. The connecting portion is formed on the sealing structure. Because the first cavity is disconnected from the second cavity, the high-temperature and high-pressure gases and conductive particles in the first cavity are unable to enter the second cavity, thereby preventing leakage from a position at which the connecting portion fits the box, and in turn, preventing the leakage of the gases and conductive particles from causing thermal runaway of the normal batteries in the vicinity.

In some embodiments, the connecting portion is a fixing hole created on the sealing structure. The fixing hole communicates with the second cavity. The exhaust assembly is fixed to the box through a fit between the fixing hole and a connecting piece.

The fixing hole is created on one side of the second cavity, the side being away from the first cavity. When a connecting piece penetrates into the fixing hole from the box, a part of the connecting piece, which is passed out of the fixing hole, may be located in the second cavity but without entering the first cavity. Therefore, the second cavity can accommodate the connecting piece and also prevent the high-temperature and high-pressure gases and conductive particles in the first cavity from entering the second cavity, thereby preventing the failure of separating the thermal runaway region from the electrical connection region.

In some embodiments, a partition portion is disposed in the exhaust portion. The first cavity is partitioned off from the second cavity by the partition portion.

The partition portion may be disposed at a position near the top and/or bottom in the exhaust assembly along the height direction of the exhaust assembly, so that the second cavity formed on one side of the partition portion is sufficient to accommodate the connecting piece, and so that the other side of the partition portion is sufficient to form a relatively large first cavity, thereby improving the exhaust efficiency.

In some embodiments, one end of the sealing structure is fixed to the exhaust portion. The connecting portion is disposed at one end, away from the exhaust portion, of the sealing structure. The sealing structure is separated from the exhaust portion so that the high-temperature and high-pressure gases and conductive particles in the exhaust portion are prevented from being expelled into the sealing structure.

In some embodiments, the exhaust portion and the sealing structure are formed in one piece, thereby implementing structural integration of the exhaust assembly, and improving structural reliability.

In some embodiments, the sealing structure includes a sealing ring or a sealant. The sealing ring or sealant is hermetically disposed at a junction between the connecting portion and the box. In this way, the fit clearance between the screw and the fixing hole can be sealed by the sealing ring or sealant, thereby further preventing gas leakage.

In some embodiments, a reinforcing rib is disposed in the exhaust portion. The reinforcing rib partitions an inner wall of the exhaust portion into at least two first cavities. The reinforcing rib can reinforce the overall structure of the exhaust portion, ensure structural reliability, enhance the ability of the exhaust portion to withstand the ejected high-pressure gas, and prolong the service life.

In some embodiments, a third cavity is further disposed in the exhaust portion. The third cavity is disposed between the first cavity and the second cavity. A through-hole is created in a sidewall of the third cavity. The third cavity communicates with the first cavity through the through-hole. Through the third cavity disposed, a part of the gas in the first cavity can flow into the third cavity through the through-hole, so that the gas can be expelled through both the first cavity and the third cavity, thereby reducing the burden of the exhaust assembly and improving the exhaust efficiency.

In some embodiments, a fireproof piece is disposed in the exhaust portion. The fireproof piece may be disposed at a position opposite to an explosion-proof valve of the battery, and can prevent fluids from directly impacting the inner wall of the exhaust portion and from resulting in destruction or even fire and combustion of the exhaust portion when the fluids such as hot air and sparks are released through the explosion-proof valve in a case of thermal runaway of the battery.

A second aspect of this application further provides a battery pack. The battery pack includes a box and at least one battery cell. The battery cell is disposed in the box. The battery pack further includes at least one exhaust assembly according to the first aspect of this application. The exhaust assembly is connected to an inner wall of the box. The battery cell is disposed on at least one side of the exhaust assembly in a thickness direction.

In some embodiments, the exhaust assembly partitions an interior of the box into at least two accommodation spaces. The battery cells are disposed in the accommodation spaces.

In some embodiments, the exhaust assembly is welded, riveted, or screwed to the box, thereby facilitating assembling of the exhaust assembly, and improving the reliability of connection between the exhaust assembly and the box.

In some embodiments, the box further includes a first part and/or a second part. The exhaust assembly is connected to the first part and/or the second part by the connecting portion. In this way, the flexibility of the connection between the exhaust assembly and the box is improved. An appropriate connection method can be selected depending on different exhaust scenarios, thereby improving the universal applicability of the exhaust assembly.

In some embodiments, a gas passage is disposed inside a sidewall of the box and/or inside the second part. The gas passage communicates with the exhaust portion.

In some embodiments, an exhaust valve is disposed on the box. The exhaust valve communicates with an outlet of the gas passage.

When a gas passage capable of communicating with the exhaust portion is disposed on the box, the exhaust valve can be connected to the outlet of the gas passage, and can control the opening and closing of the outlet of the gas passage. In this way, the outlet can be opened through the exhaust valve when the gas needs to be expelled out, so as to communicate the gas passage to the external atmosphere; and the outlet can be controlled to be closed when no gas needs to be expelled, so as to implement sealing and prevent external impurities from entering the gas passage.

A third aspect of this application further provides an electrical device. The electrical device includes the battery pack according to the second aspect of this application.

Understandably, the above general description and the following detailed description are merely illustrative without limiting this application.

### BRIEF DESCRIPTION OF DRAWINGS

FIG. 1 is a schematic structural diagram of a vehicle according to some embodiments of this application;
FIG. 2 is a schematic exploded view of a battery pack according to some embodiments of this application;
FIG. 3 is a schematic exploded view of a battery cell according to some embodiments of this application; and
FIG. 4 is a schematic diagram (i) of an exhaust assembly applied in a battery pack according to an embodiment of this application;
FIG. 5 is a schematic diagram (ii) of an exhaust assembly applied in a battery pack according to an embodiment of this application;
FIG. 6 is a schematic diagram (iii) of an exhaust assembly applied in a battery pack according to an embodiment of this application;
FIG. 7 is a schematic diagram (iv) of an exhaust assembly applied in a battery pack according to an embodiment of this application;
FIG. 8 is a close-up view of a part A shown in FIG. 4;
FIG. 9 is a side view of an exhaust assembly applied in a battery pack according to an embodiment of this application;
FIG. 10 is a schematic diagram (i) of connection between an exhaust assembly and a box; and
FIG. 11 is a schematic diagram (ii) of connection between an exhaust assembly and a box.

### List of reference numerals:

100-battery pack;
1-box;
11-first part;
12-second part;
2-battery cell;
21-end cap;
22-housing;
23-electrode assembly;
3-exhaust assembly;
31-connecting portion;
32-exhaust portion;
321-first cavity;
321a-exhaust hole;
322-third cavity;
322a-through-hole;
323-reinforcing rib;
324-partition portion;
33-sealing structure;;
331-second cavity;
4-connecting piece;
1000-vehicle;
1100-controller;
1200-motor.

The drawings described here are incorporated into the specification as a part of the specification. The drawings illustrate embodiments of this application and are used together with the specification to interpret the principles of this application.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

In this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

"A plurality of" referred to in this application means two or more (including two). Similarly, "a plurality of groups" means two or more groups (including two groups), and "a plurality of pieces" means two or more pieces (including two pieces).

The market development trend shows that, serving as a main type of energy storage device, power batteries are applied in an increasingly wide range of fields, and are not only used in energy storage power systems such as hydro, thermal, wind, and solar power stations, but also widely used in electric means of transport such as electric bicycles, electric motorcycles, and electric vehicles, and used in many other fields such as military equipment and aerospace.

This application provides a battery pack 100. The battery pack 100 includes a plurality of energy modules. Each energy module can provide electrical energy to ensure that the battery meets the actual power supply requirements. The energy module includes at least one battery cell 2. In other words, one energy module may be formed by one battery cell, or one energy module may be formed by two, three or more battery cells connected in series, parallel, or series-and-parallel pattern. The series-and-parallel pattern means a combination of series connection and parallel connection of the plurality of battery cells.

The plurality of energy modules in the battery may be connected in series, parallel, or series-and-parallel pattern. The series-and-parallel pattern means a combination of series connection and parallel connection of the plurality of energy modules. A plurality of energy modules may be connected in series to form an energy assembly to obtain a higher voltage. The battery further includes a module frame and an assembly frame. Each energy module is fitted with a module frame. The module frame is connected to the energy module to fix the energy module. A plurality of module frames are jointly connected to one assembly frame to fix the plurality of module frames. In this case, the battery becomes a complete integral structure.

To ensure that the structural strength of the module frame and the assembly frame meets the practical requirements, the module frame and the assembly frame are typically made of a metal material. For example, the module frame and module frame may be made of steel or aluminum alloy. An insulation film is disposed between the energy module and the module frame to prevent the module frame from conducting electricity and posing a safety hazard.

When a battery is in normal operation, the battery can provide continuous electrical energy for a device in a stable and safe manner. However, when the battery is in an abnormal operating state, such as abuse, short circuit, or overly high C-rate, the energy module inside the battery may be thermally runaway. When the energy module is thermally runaway, high-temperature and high-pressure gases and conductive particles are ejected. The high-temperature and high-pressure gases and conductive particles lead to breakage of the insulation film between the thermally runaway energy module and the corresponding module frame, that is, leads to insulation failure, thereby resulting in conduction between the thermally runaway energy module and the corresponding module frame, and making the corresponding module frame electrically charged. In addition, because the module frame is connected to the assembly frame, electrical conduction is caused between the thermally runaway energy module, the corresponding module frame, and the assembly frame. In this case, the energy module, the corresponding module frame, and the assembly frame are maintained at the same potential. In addition, because the module frame corresponding to each of other normal energy modules is connected to the assembly frame, the module frame corresponding to each of other normal energy modules is also electrically charged. The module frame corresponding to a normal energy module and the assembly frame are maintained at the same potential.

Other normal energy modules generate a potential difference versus each corresponding electrically charged module frame and the electrically charged assembly frame. Moreover, because the plurality of energy modules are connected in series one by one, the voltages of the energy modules are increased progressively in the series connection path to form a high-voltage system. Therefore, in the series connection path, the voltage at a position corresponding to a normal energy module farther from the thermally runaway energy module is higher, and the normal energy module generates a higher potential difference versus the electrically charged module frame and electrically charged assembly frame at this position. When the potential difference exceeds a critical value, the high voltage will break down an electrical clearance between the energy module and the module frame or the assembly frame to generate arcing. The arcing ignites a fire, and in turn, generates hazardous thermal energy and mechanical energy (such as explosion gas waves and shock waves), and may break down other normal energy modules, thereby causing more thermal runaways and insulation failure and accelerating the spread of heat inside the battery, and in turn, giving rise to a fire or explosion of the battery.

Based on the above considerations, in order to solve the problem that the thermal runaway of the energy module leads to insulation failure and generates arcing, a typical countermeasure in this field is that the high-temperature and high-pressure gases and conductive particles ejected by the thermally runaway battery are directionally expelled by an exhaust beam. However, the exhaust beam needs to be connected to the box of the battery pack through a connecting piece such as a screw. A mounting gap is inevitably left at the screw joint. The mounting gap makes the high-temperature and high-pressure gases and conductive particles leak and flow to the normal batteries around, and poses a thermal runaway risk to the normal batteries.

To solve the above problem, after in-depth research, the inventor hereby designs a new exhaust assembly 3. The exhaust assembly 3 includes an exhaust portion 32, a connecting portion 31, and a sealing structure 33. The exhaust portion 32 is configured to receive emissions from a battery cell. The exhaust assembly 3 is connected to a box 1 of a battery pack by the connecting portion 31. The sealing structure 33 is disposed at a junction between the connecting portion 31 and the box 1.

The emissions from the battery cell may be high-temperature and high-pressure gases and conductive particles. The high-temperature and high-pressure gases and conductive particles expelled from a thermally runaway battery cell 2 can enter the exhaust portion 32 and be directionally expelled out of the battery pack through the exhaust portion 32. The connecting portion 31 may be connected to the box 1 of the battery pack by a connecting piece 4 such as a bolt. The sealing structure 33 can seal a gap at a junction between the connecting portion 31 and the box 1, thereby avoiding gas leakage and preventing normal battery cells 2 in the vicinity from being thermally runaway.

The battery pack 100 disclosed in embodiments of this application is applicable to, but without being limited to, electrical devices such as a vehicle, watercraft, or aircraft. A power supply system of the electrical devices may be formed by using the battery cell 2, the battery pack 100, and the like disclosed herein, so as to reduce the thermal runaway risk of the battery pack 100 and improve the safety of the battery pack 100 in use.

An embodiment of this application provides an electrical device that uses a battery pack 100 as a power supply. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1000 is used as an example of the electrical device according to an embodiment of this application.

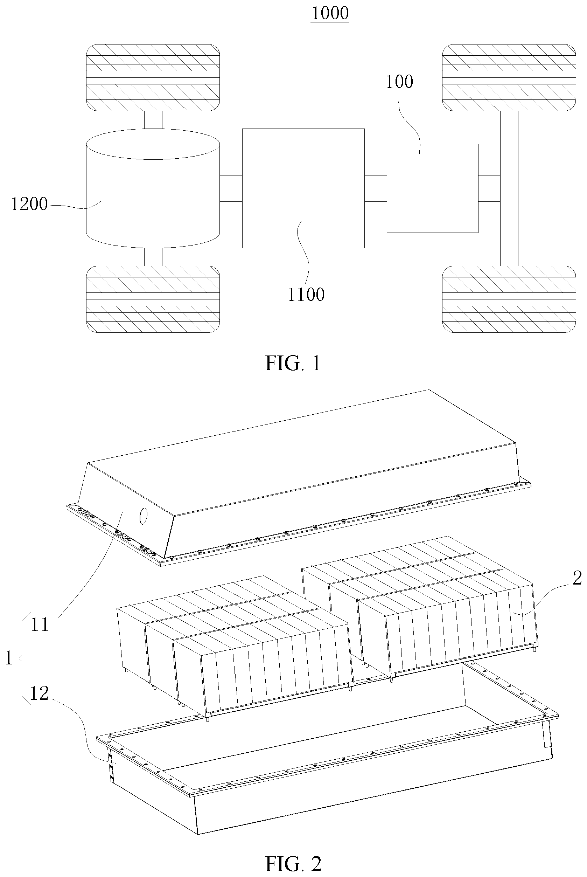

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery pack 100 is disposed inside the vehicle 1000. The battery pack 100 may be disposed at the bottom, front, or rear of the vehicle 1000. The battery pack 100 may be configured to supply power to the vehicle 1000. For example, the battery pack 100 may serve as an operating power supply of the vehicle 1000. The vehicle 1000 may further include a controller 200 and a motor 300. The controller 200 is configured to control the battery pack 100 to supply power to the motor 300, for example, to meet electrical energy requirements in starting, navigating, or running the vehicle 1000.

In some embodiments of this application, the battery pack 100 serves not only as an operating power supply of the vehicle 1000, but may also serve as a drive power supply of the vehicle 1000 to provide driving power for the vehicle 1000 in place of or partially in place of oil or natural gas.

As shown in FIG. 2, the battery pack 100 disclosed herein includes a box 1 and a battery cell 2. The battery cell 2 is accommodated in the box 1. The box 1 is configured to provide an accommodation space for the battery cell 2. The box 1 may be in various structures. In some embodiments, the box 1 may include a first part 11 and a second part 12. The first part 11 and the second part 12 fit and cover each other. The first part 11 and the second part 12 together define an accommodation space configured to accommodate the battery cell 2. The second part 12 may be a hollow structure opened at one end. The first part 11 may be a plate-like structure. The first part 11 fits on an opening side of the second part 12 so that the first part 11 and the second part 12 together define the accommodation space. Alternatively, both the first part 11 and the second part 12 may be hollow structures opened at one side. The opening side of the first part 11 fits the opening side of the second part 12. Definitely, the box 1 formed by the first part 11 and the second part 12 may be in various shapes, such as a cylinder or a cuboid.

The battery pack 100 may contain a plurality of battery cells 2. The plurality of battery cells 2 may be connected in series, parallel, or series-and-parallel pattern. The series-and-parallel pattern means a combination of series connection and parallel connection of the plurality of battery cells 2. The plurality of battery cells 2 may be directly connected in series, parallel, or series-and-parallel pattern, and then the whole of the plurality of battery cells 2 may be accommodated in the box 1. Alternatively, to make up a battery pack 100, the plurality of battery cells 2 may be connected in series, parallel, or series-and-parallel pattern to form a battery module first, and then a plurality of battery modules are connected in series, parallel, or series-and-parallel pattern to form a whole and accommodated in the box 1. The battery pack 100 may further include other structures. For example, the battery pack 100 may further include a busbar component. The busbar component is configured to implement electrical connection between the plurality of battery cells 2.

In this application, a battery cell 2 may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The shape of the battery cell is not limited herein. In terms of the packaging form, the battery cell is typically classed into three types: cylindrical battery cell, prismatic battery cell, and pouch-type battery cell. The type of the battery cell is not limited herein.

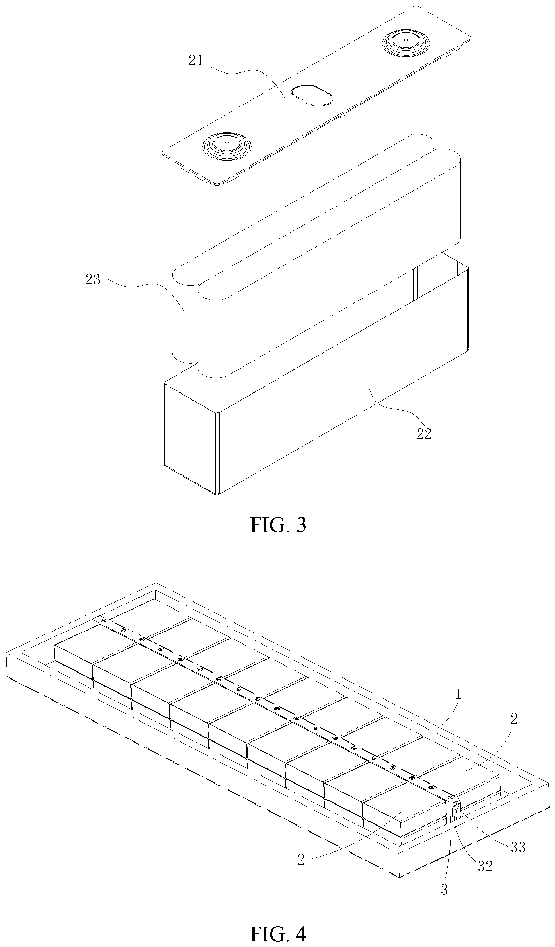

Referring to FIG. 3, FIG. 3 is a schematic structural exploded view of a battery cell 20 according to some embodiments of this application. The battery cell 2 is a minimum unit of a battery. As shown in FIG. 3, the battery cell 2 includes an end cap 21, a housing 22, an electrode assembly 23, and other functional components.

The end cap 21 is a component that fits and covers the opening of the housing 22 to isolate the internal environment of the battery cell 2 from the external environment. Without limitation, the shape of the end cap 21 may be adapted to the shape of the housing 22 to fit the housing 22. Optionally, the end cap 21 may be made of a material of appropriate hardness and strength (such as aluminum alloy), so that the end cap 21 is not prone to deform when squeezed or impacted. In this way, the battery cell 2 achieves higher structural strength and higher safety performance. In some embodiments, a pressure relief mechanism configured to release an internal pressure when the internal pressure or temperature of the battery cell 2 reaches a threshold may be further disposed on the end cap 21. The end cap 21 may also be made of a variety of materials such as copper, iron, aluminum, stainless steel, aluminum alloy, or plastic, and the materials are not particularly limited herein. In some embodiments, an insulation piece may be further disposed on an inner side of the end cap 21. The insulation piece may be configured to isolate an electrically connected component in the housing 22 from the end cap 21 to reduce short-circuit risks. For example, the insulator may be plastic, rubber, or the like.

The housing 22 is a component configured to fit the end cap 21 to form an internal environment of the battery cell 2. The formed internal environment may be used to accommodate the electrode assembly 23, an electrolyte solution, and other components. The housing 22 and the end cap 21 may be stand-alone components. An opening may be made on the housing 22. At the opening, the end cap 21 fits with the opening to form the internal environment of the battery cell 2. Without limitation, the end cap 21 and the housing 22 may be integrated instead. Specifically, the end cap 21 and the housing 22 may form a common connection interface before other components are put into the housing. Subsequently, when the interior of the housing 22 needs to be sealed, the end cap 21 is made to fit with the housing 22. The housing 22 may be in various shapes and sizes, such as a cuboid, cylinder, or hexagonal prism. Specifically, the shape of the housing 22 may be determined depending on the specific shape and size of the electrode assembly 23. The housing 22 may be made of a variety of materials such as copper, iron, aluminum, stainless steel, aluminum alloy, or plastic, without being particularly limited herein.

As shown in FIG. 4 to FIG. 7, the battery pack disclosed herein further includes a box 1 and at least one exhaust assembly 3. Both the battery cell 2 and the exhaust assembly 3 may be disposed in the box 1. The exhaust assembly 3 is connected to an inner wall of the box 1. The battery cell 2 is disposed on at least one side of the exhaust assembly 3 in a thickness direction. The exhaust assembly 3 can partition the interior of the box 1 into a plurality of spaces for accommodating the battery cells 2 or the battery cell 2 module. An explosion-proof valve on the battery cell 2 may communicate with the exhaust portion 32 of the exhaust assembly 3. When a battery cell 2 fails, high-temperature and high-pressure gases and conductive particles can be expelled into the exhaust portion 32 through the explosion-proof valve. The exhaust portion 32 can directionally expel the received high-temperature and high-pressure gases and conductive particles.

This application provides an electrical device that uses a battery pack 100 as a power supply. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

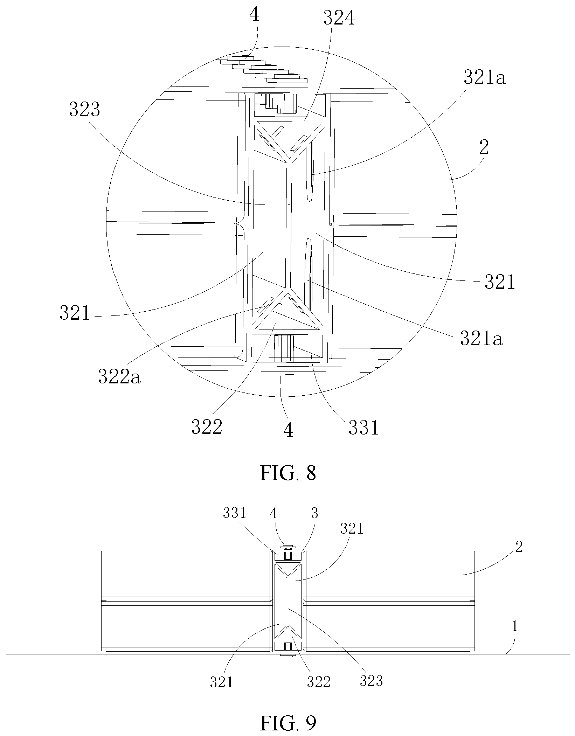

Specifically, as shown in FIG. 8, a first cavity 321 is disposed in the exhaust portion 32. An exhaust hole 321a coordinating with the battery cell is disposed on a sidewall of the first cavity 321.

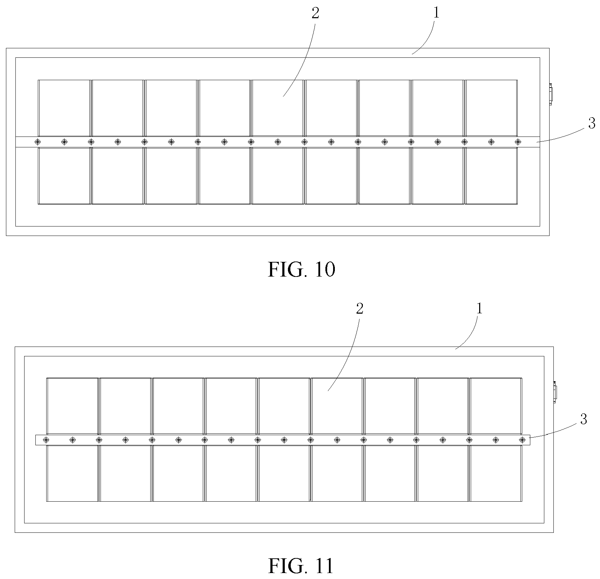

The exhaust portion 32 may be a cuboidal plate-like structure. The first cavity 321 in the exhaust portion may run through both ends in the length direction thereof or not. Specifically, as shown in FIG. 10, when a cavity for exhausting is also disposed in a sidewall of the box 1 of the battery pack, the first cavity 321 may run through both ends of the exhaust portion 32 in the length direction, so as to communicate with the cavity inside the box 1. As shown in FIG. 2 and FIG. 11, when no cavity for exhausting is disposed in the sidewall of the box 1 of the battery pack but the cavity for exhausting is disposed in the first part 11 or the second part 12 of the box 1, the first cavity 321 does not necessarily run through both ends of the exhaust portion 32 in the length direction. Instead, an exhaust port is created at the top or the bottom of the exhaust portion 32. The exhaust port can communicate with the cavity in the first part 11 or the second part 12 of the box 1 to expel the gases. When a battery cell 2 fails, the high-temperature and high-pressure gases and conductive particles expelled from the battery cell 2 can enter the first cavity 321 through the exhaust hole 321a, so as to be expelled out of the battery pack through the first cavity 321.

Specifically, as shown in FIG. 8, the sealing structure 33 includes a second cavity 331. The second cavity 331 is disconnected from the first cavity 321. The connecting portion 31 is formed on the sealing structure 33.

In mounting the exhaust assembly 3 onto the box 1 of the battery pack, the exhaust assembly may be fixed to the box 1 through a connecting portion 31. Because the connecting portion 31 is formed on the sealing structure 33, that is, the connecting portion 31 is a part of the sealing structure 33, after the connecting portion 31 is connected to the box 1, the second cavity 331 can be aligned with a position at which the connecting portion 31 fits the box 1. Because the first cavity is disconnected from the second cavity 331, the high-temperature and high-pressure gases and conductive particles in the first cavity are unable to enter the second cavity 331, thereby preventing leakage from the position at which the connecting portion 31 fits the box 1, and in turn, preventing the leakage of the gases and conductive particles from causing thermal runaway of the normal battery cells 2 in the vicinity.

Specifically, the connecting portion 31 is a fixing hole created on the sealing structure 33. The fixing hole communicates with the second cavity 331. The exhaust assembly 3 is fixed to the box 1 through a fit between the fixing hole and a connecting piece 4.

The connecting piece 4 may be a bolt, a screw, a rivet, a buckle, or the like to facilitate assembling of the exhaust assembly 3. The fixing hole is created on one side of the second cavity 331, the side being away from the first cavity 321. When a connecting piece 4 penetrates into the fixing hole from the box 1, a part of the connecting piece 4, which is passed out of the fixing hole, may be located in the second cavity 331 but without entering the first cavity 321. Therefore, the second cavity 331 can accommodate the connecting piece 4 and also prevent the high-temperature and high-pressure gases and conductive particles in the first cavity 321 from entering the second cavity 331, thereby preventing the failure of separating the thermal runaway region from the electrical connection region.

Specifically, as shown in FIG. 8, a partition portion 324 is disposed in the exhaust portion 32. The first cavity 321 is partitioned off from the second cavity 331 by the partition portion 324.

The partition portion 324 may be a flat plate-like structure, and can extend in the length direction of the exhaust assembly 3. The partition portion 324 may be disposed at a position near the top and/or bottom in the exhaust assembly 3 along the height direction of the exhaust assembly 3, so that the second cavity 331 formed on one side of the partition portion 324 is sufficient to accommodate the connecting piece 4, and so that the other side of the partition portion 324 is sufficient to form a relatively large first cavity 321, thereby improving the exhaust efficiency.

Specifically, one end of the sealing structure 33 is fixed to the exhaust portion 32. The connecting portion 31 is disposed at one end, away from the exhaust portion 32, of the sealing structure 33.

The sealing structure 33 may be an independent structural component. One end of the sealing structure 33 may be fixed to the exhaust portion 32 by a connecting piece 4 such as a bolt, screw, rivet, or buckle. The other end of the sealing structure 33 may be fixed to the box 1 by the connecting piece 4. The sealing structure 33 is separated from the exhaust portion 32 so that the high-temperature and high-pressure gases and conductive particles in the exhaust portion 32 are prevented from being expelled into the sealing structure 33. The sealing structure 33 may be connected to the box 1 by welding, bonding, or other means.

Specifically, the exhaust portion 32 and the sealing structure 33 may be formed in one piece. To be specific, in a process of molding the exhaust portion 32, the sealing structure 33 can be molded directly, thereby implementing structural integration of the exhaust assembly 3, and improving structural reliability.

Specifically, the sealing structure 33 may include a sealing ring or a sealant. The sealing ring or sealant is hermetically disposed at a junction between the connecting portion 31 and the box 1. When the connecting piece 4 is a screw threaded in the fixing hole, the nut of the screw can press the sealing ring or the sealant onto the box 1 or at a position around the fixing hole. In this way, the fit clearance between the screw and the fixing hole can be sealed by the sealing ring or sealant, thereby further preventing gas leakage. Definitely, the sealing structure 33 may further include other sealing elements made of heat-resistant or insulating materials.

Specifically, as shown in FIG. 8 and FIG. 9, a reinforcing rib 323 is disposed in the exhaust portion 32. The reinforcing rib 323 partitions an inner wall of the exhaust portion 32 into at least two first cavities 321.

In molding the exhaust portion 32, the reinforcing rib 323 can be formed in one piece. The reinforcing rib 323 can reinforce the overall structure of the exhaust portion 32, ensure structural reliability, enhance the ability of the exhaust portion 32 to withstand the ejected high-pressure gas, and prolong the service life. In an embodiment, the reinforcing rib 323 may separate two first cavities in the thickness direction of the exhaust assembly 3. Therefore, through the two first cavities, the high-temperature and high-pressure gases ejected from the battery cells 2 on the two sides of the exhaust assembly 3 can be expelled, thereby preventing the high-temperature and high-pressure gases on one side from adversely affecting the battery cells 2 on the other side.

Specifically, a third cavity 322 is further disposed in the exhaust portion 32. The third cavity 322 is disposed between the first cavity 321 and the second cavity 331. A through-hole 322a is created in a sidewall of the third cavity 322. The third cavity 322 communicates with the first cavity 321 through the through-hole 322a.

When a large amount of high-temperature and high-pressure gas is accumulated in the first cavity 321, a heavy burden is imposed on the exhaust assembly 3 as a whole, making the gas unable to be expelled in time, for example. The large amount of high-temperature and high-pressure gas accumulated exerts a great pressure on the inner wall of the first cavity 321, and is prone to deform and damage the exhaust assembly 3 and reduce the service life. For this reason, in an embodiment of this application, a third cavity 322 is disposed. A part of the gas in the first cavity 321 can flow into the third cavity 322 through the through-hole 322a, so that the gas can be expelled through both the first cavity 321 and the third cavity 322, thereby reducing the burden of the exhaust assembly 3 and improving the exhaust efficiency.

Specifically, a fireproof piece is disposed in the exhaust portion 32. The fireproof piece may be disposed at a position opposite to an explosion-proof valve of the battery cell 2, and can prevent fluids from directly impacting the inner wall of the exhaust portion 32 and from resulting in destruction or even fire and combustion of the exhaust portion 32 when the fluids such as hot air and sparks are released through the explosion-proof valve in a case of thermal runaway of the battery cell 2.

The fireproof piece may be made of a high-melting material to prevent a flame from melting the fireproof piece. Specifically, the fireproof piece in an embodiment of this application is made of mica. Due to a high melting point (approximately 1723 °C) of mica, the mica meets fire resistance requirements of the fireproof piece. In addition, a mica board is highly processable. However, this application is not limited to mica used as an example of the material.

An embodiment of this application further provides a battery pack. As mentioned above, the battery pack includes a box 1 and at least one battery cell 2. The battery cell 2 is disposed in the box 1. The exhaust assembly 3 is connected to an inner wall of the box 1. The battery cell 2 is disposed on at least one side of the exhaust assembly 3 in a thickness direction. The exhaust assembly 3 may be welded, riveted, or screwed to the box 1, thereby facilitating assembling of the exhaust assembly 3, and improving the reliability of connection between the exhaust assembly 3 and the box 1.

Specifically, as shown in FIG. 4 to FIG. 7, the box 1 of the battery pack further includes a first part 11 and/or a second part 12. The exhaust assembly 3 is connected to the first part 11 and/or the second part 12 by the connecting portion 31. In this way, the flexibility of the connection between the exhaust assembly 3 and the box 1 is improved. An appropriate connection method can be selected depending on different exhaust scenarios, thereby improving the universal applicability of the exhaust assembly 3.

A gas passage is disposed inside a sidewall of the box 1 and/or inside the second part 12. The gas passage communicates with the exhaust portion 32. In other words, a cavity for gas ventilation may be disposed inside the first part 11 or the second part 12. When the exhaust assembly 3 is connected to the first part 11 or the second part 12 by the connecting portion 31, the exhaust portion 32 may communicate with the cavity in the first part 11 or the second part 12. The gas expelled by the exhaust portion 32 can enter the cavity in the first part 11 or the second part 12, and can be further expelled out of the battery pack through the cavity in the first part 11 or the second part 12.

Specifically, an exhaust valve may be disposed on the box. When a gas passage capable of communicating with the exhaust portion is disposed on the box, the exhaust valve can be connected to the outlet of the gas passage, and can control the opening and closing of the outlet of the gas passage. In this way, the outlet can be opened through the exhaust valve when the gas needs to be expelled out, so as to communicate the gas passage to the external atmosphere; and the outlet can be controlled to be closed when no gas needs to be expelled, so as to implement sealing and prevent external impurities from entering the gas passage.

According to some embodiments of this application, this application further provides an electrical device. The electrical device includes the battery pack disclosed in any one of the above technical solutions, and the battery pack is configured to provide electrical energy for the electrical device.

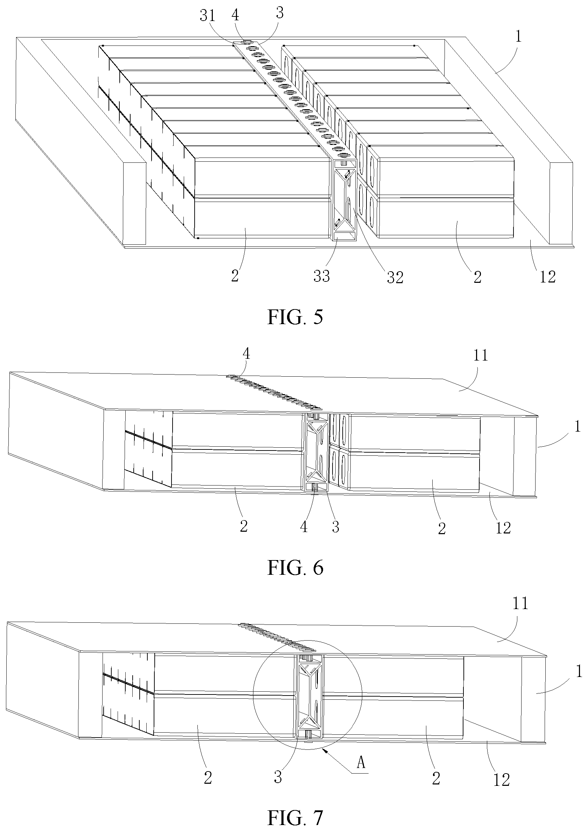

According to some embodiments of this application, referring to FIG. 7 and FIG. 8, this application provides an exhaust assembly. The exhaust assembly is disposed in a battery pack 100, and can partition the interior of the battery pack 100 into at least two accommodation spaces configured to accommodate battery cells 2. A first cavity 321, a second cavity 331, and a third cavity 322 are disposed in the exhaust assembly. The third cavity 322 is disposed between the first cavity 321 and the second cavity 331. The battery cells 2 may be disposed on two sides of the exhaust assembly respectively. Each battery cell can communicate with a corresponding first cavity 321 through an explosion-proof valve of the battery cell. A thermally runaway battery cell 2 can expel the high-temperature and high-pressure gases and conductive particles into the first cavity 321 through the explosion-proof valve. The first cavity 321 can expel the gas out of the battery pack 100. At the same time, the third cavity 322 communicates with the first cavity 321 through the through-hole 322a, thereby improving the exhaust efficiency of the gas and the safety of the exhaust. The second cavity 331 is disposed at both ends of the exhaust assembly in the height direction. One end, away from the first cavity 321, of the second cavity 331, may be fixed to the box 1 of the battery pack 100 by a connecting piece such as a screw. The second cavity 331 is disconnected from the first cavity 321 and the third cavity 322. Therefore, the gas in the first cavity 321 or the third cavity 322 does not enter the second cavity 331, thereby preventing gas leakage at the fastening position of the connecting piece.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. An exhaust assembly, **characterized in that** the exhaust assembly comprises an exhaust portion, a connecting portion, and a sealing structure; and the exhaust portion is configured to receive emissions from a battery cell; and
the exhaust assembly is connected to a box of a battery pack by the connecting portion, and the sealing structure is disposed at a junction between the connecting portion and the box.

2. The exhaust assembly according to claim 1, **characterized in that** a first cavity is disposed in the exhaust portion, and an exhaust hole coordinating with the battery cell is disposed on a sidewall of the first cavity.

3. The exhaust assembly according to claim 2, **characterized in that** the sealing structure comprises a second cavity, the second cavity is disconnected from the first cavity, and the connecting portion is formed on the sealing structure.

4. The exhaust assembly according to claim 3, **characterized in that** the connecting portion is a fixing hole created on the sealing structure, the fixing hole communicates with the second cavity, and the exhaust assembly is fixed to the box through a fit between the fixing hole and a connecting piece.

5. The exhaust assembly according to claim 3, **characterized in that** a partition portion is disposed in the exhaust portion, and the first cavity is partitioned off from the second cavity by the partition portion.

6. The exhaust assembly according to claim 1, **characterized in that** one end of the sealing structure is fixed to the exhaust portion, and the connecting portion is disposed at one end, away from the exhaust portion, of the sealing structure.

7. The exhaust assembly according to any one of claims 1 to 6, **characterized in that** the exhaust portion and the sealing structure are formed in one piece.

8. The exhaust assembly according to any one of claims 1 to 6, **characterized in that** the sealing structure comprises a sealing ring or a sealant, and the sealing ring or sealant is hermetically disposed at a junction between the connecting portion and the box.

9. The exhaust assembly according to any one of claims 2 to 6, **characterized in that** a reinforcing rib is disposed in the exhaust portion, and the reinforcing rib partitions an inner wall of the exhaust portion into at least two first cavities.

10. The exhaust assembly according to any one of claims 2 to 6, **characterized in that** a third cavity is further disposed in the exhaust portion, the third cavity is disposed between the first cavity and the second cavity, a through-hole is created in a sidewall of the third cavity, and the third cavity communicates with the first cavity through the through-hole.

11. The exhaust assembly according to any one of claims 2 to 6, **characterized in that** a fireproof piece is disposed in the exhaust portion.

12. A battery pack, wherein the battery pack comprises a box and at least one battery cell, and the battery cell is disposed in the box, **characterized in that** the battery pack further comprises at least one exhaust assembly according to any one of claims 1 to 11, the exhaust assembly is connected to an inner wall of the box, and the battery cell is disposed on at least one side of the exhaust assembly in a thickness direction.

13. The battery pack according to claim 12, **characterized in that** the exhaust assembly partitions an interior of the box into at least two accommodation spaces, and the battery cells are disposed in the accommodation spaces.

14. The battery pack according to claim 12, **characterized in that** the exhaust assembly is welded, riveted, or screwed to the box.

15. The battery pack according to claim 12, **characterized in that** the box further comprises a first part and/or a second part, the first part is fastened to the second part, and the exhaust assembly is connected to the first part and/or the second part by the connecting portion.

16. The battery pack according to claim 15, **characterized in that** a gas passage is disposed inside a sidewall of the box and/or inside the second part, and the gas passage communicates with the exhaust portion.

17. The battery pack according to claim 16, **characterized in that** an exhaust valve is disposed on the box, and the exhaust valve communicates with an outlet of the gas passage.

18. An electrical device, **characterized in that** the electrical device comprises the battery pack according to any one of claims 12 to 17.
